**Europäisches Patentamt**

**European Patent Office**

**Office européen des brevets**

(19)

(11) Veröffentlichungsnummer : **0 302 539 B1**

(12) # EUROPÄISCHE PATENTSCHRIFT

(45) Veröffentlichungstag der Patentschrift :
**12.06.91 Patentblatt 91/24**

(51) Int. Cl.⁵ : **B65G 47/44**

(21) Anmeldenummer : **88201331.1**

(22) Anmeldetag : **28.06.88**

(54) Vorrichtung zur Aufgabe von Schüttgut auf eine bewegliche Unterlage.

(30) Priorität : **07.08.87 DE 3726271**

(43) Veröffentlichungstag der Anmeldung :
**08.02.89 Patentblatt 89/06**

(45) Bekanntmachung des Hinweises auf die
Patenterteilung :
**12.06.91 Patentblatt 91/24**

(84) Benannte Vertragsstaaten :
**AT BE DE FR GB IT LU NL SE**

(56) Entgegenhaltungen :
**DE-B- 1 218 344**
**US-A- 4 469 210**

(73) Patentinhaber : **METALLGESELLSCHAFT AG**
**Reuterweg 14 Postfach 3724**
**W-6000 Frankfurt/M.1 (DE)**

(72) Erfinder : **Schuster, Gert**
**Am Mühlgraben 8**
**W-6392 Neu Anspach (DE)**

EP 0 302 539 B1

**Beschreibung**

Die Erfindung betrifft eine Vorrichtung zur Aufgabe von Schüttgut mit großer Korngrößenbandbreite auf eine gasdurchlässige, bewegliche Unterlage in Schichten mit unterschiedlicher Korngröße.

Schüttgüter werden öfters auf bewegliche, gasdurchlässige Unterlagen chargiert und dann mittels hindurchgeleiteter Gase behandelt. Als besonderes Beispiel wird die Kühlung von heißem Sintergut auf runden oder geraden Sinterkühlern genannt. Dabei wird das von der Sintermaschine abgeworfene Sintergut im Sinterbrecher zerkleinert und eventuell nach einer Absiebung auf den Sinterkühler chargiert. Dort wird Kühlluft durch das auf der gasdurchlässigen Unterlage liegende Sintergut-Bett gesaugt oder gedrückt und dabei das Sintergut gekühlt. Solche Sinterkühler sind z.B. beschrieben in der US-PS-2 892 265. Bei der Aufgabe des Sintergutes auf den Sinterkühler erfolgt durch die natürliche Entmischung beim Abwurf eine Aufgabe in entmischter Form, wobei vorwiegend Feinkorn in der Unterschicht und Grobkorn in der Oberschicht liegt. Da die Zufuhr des Sintergutes zur Aufgabeschurre in den meisten Fällen seitlich zur Bewegungsrichtung des Kühlers erfolgt, erfolgt auch noch eine Entmischung des Sintergutes in horizontaler Richtung. Durch diese Entmischungen wird eine ungleiche Permeabilität der Schüttung erzeugt, was zu schlechteren Kühleffekten, höherer Gebläseleistung und Schwierigkeiten auf der Förderstrecke nach dem Abwurf vom Kühler führt. Diese Probleme werden noch vergrößert, wenn das Feinkorn nicht vor dem Kühler durch Heißabsiebung abgetrennt wird und dadurch ein großer Feinanteil im Bett vorhanden ist. Außerdem wird dann der mit der Kühlluft abgeführte Feinanteil groß. Dies ist auch der Fall, wenn gemäß der DE-PS-924 794 zur Verhinderung des Durchfallens von Feingut eine Trennung durch Siebung durchgeführt wird, und die grobe Fraktion als Unterschicht und die Feinfraktion als Oberschicht aufgegeben wird. Außerdem ist eine zusätzliche Siebvorrichtung erforderlich.

Der Erfindung liegt die Aufgabe zugrunde, diese Nachteile zu vermeiden und eine einfache und weitgehend verschleißfreie Vorrichtung zu schaffen, welche eine unkontrollierte Entmischung des Schüttgutes bei der Aufgabe verhindert und eine genau kontrollierte Aufgabe in horizontalen Schichten unterschiedlicher Korngröße ermöglicht.

Die Lösung dieser Aufgabe erfolgt erfindungsgemäß durch eine Vorrichtung, die gekennzeichnet ist durch

a) eine Schurre (1) mit in horizontaler Ebene liegender runder Austragsöffnung (2) zur Aufnahme des Schüttgutes,

b) einen unter der Austragsöffnung (2) der Schurre (1) angeordneten sattelförmigen Verteiler (3) mit konvex- kreisbogenförmiger Abwurfkante (4), die entgegen der Förderrichtung der beweglichen Unterlage (5) gerichtet ist, und mit einem von der Abwurfkante (4) ausgehenden Materialpolster (6) aus Schüttgut auf dem Boden des sattelförmigen Verteilers (3),

(c) einen Pufferbunker (7) zur Aufnahme des von dem sattelförmigen Verteiler (3) abgeworfenen Schüttgutes,

d) eine Materialsäule (8) aus Schüttgut im Pufferbunker (7) mit einem unterhalb der Abwurfkante (4) des sattelförmigen Verteilers (3) liegenden Schüttgutkamm (9),

e) einen solchen Radius der kreisbogenförmigen Abwurfkante (4), daß die zur Erzielung des Schüttgutkammes (9) erforderliche Abwurfbreite erzielt wird,

f) eine in Förderrichtung der Unterlage (5) vorne liegende, in horizontaler Ebene konkav ausgebildete Austragskante (10) im Pufferbunker (7) und eine in Förderrichtung hinten liegende, in horizontaler Ebene konvex ausgebildete Austragskante (11), wobei die hintere Austragskante (11) in vertikaler Richtung tiefer angeordnet ist als die vorderere Austragskante (10),

g) einen zu den Austragskanten (10, 11) hin geneigt angeordneten Boden (12) des Pufferbunkers (7),

h) eine solche Anordnung der Austragskanten (10, 11), daß die Schnittpunkte (13) von unter dem Böschungswinkel α des Schüttgutes von der Unterlage (5) an die kreisbogenförmigen Austragskanten (10, 11) gelegten Geraden (14, 15) vor der vorne liegenden Austragskante (10) liegen und die gewünschte Schichthöhe auf der Unterlage (5) ergeben.

Die Vorteile der Erfindung bestehen darin, daß eine unkontrollierte Entmischung des Schüttgutes bei der Übergabe und Aufgabe auf die bewegliche Unterlage vermieden wird, gleichzeitig eine genau kontrollierte Aufgabe in horizontale Schichten unterschiedlicher Korngröße erzielt wird, und ein Verschleiß der Aufgabevorrichtung weitgehend vermieden wird. Dadurch wird eine sehr gute und gleichmäßige Permeabilität des Bettes erzielt, der Staubaustrag stark verringert und gleichzeitig der Durchfall am Feingut durch die Öffnungen der Unterlage weitgehend vermieden. Diese Vorteile sind auch bei schräger Zufuhr des Schüttgutes vorhanden.

Die Schurre kann im Querschnitt rechteckig oder rund ausgebildet sein. Als Boden wird der untere Teil bezeichnet. Die Neigung dieses Bodens wird so gewählt, daß sich von der runden Austragsöffnung ein Materialpolster bis zu den Seitenwänden bildet, das als Rutschfläche dient und so den Boden vor Verschleiß schützt. Um die Austragsöffnung herum wird ein schmales, nach oben überstehender Ring angeordnet, der die Kante der Austragsöffnung vor Verschleiß schützt. Das Schüttgut wird so in die Schurre aufgegeben, daß es auf das Materialpolster fällt und auf diesen zur Austragsöffnung herunterrutscht. Dabei wird der Materialstrom zusammengezogen und gleichmäßig vermischt, so daß vorherige Entmischungen wieder ausgeglichen werden. Der Durchmesser der Austragsöffnung wird in Relation zur Korngröße des Schüttgutes und Durchsatzleistung gewählt. Der sattelförmige Verteiler wird vorzugsweise im oberen Teil des Pufferbunkers angeordnet, wodurch eine geringe Bauhöhe erzielt wird. Der Boden des Verteilers kann teilweise oder ganz horizontal sowie teilweise oder ganz geneigt angeordnet sein. Er wird so angeordnet, daß sich auf ihm ein Materialpolster bildet, das von der kreisbogenförmigen Abwurfkante ausgeht, und das als Rutschfläche für das Schüttgut dient. Um die Abwurfkante wird ein schmaler Blechstreifen angeordnet, der nach oben übersteht. Die Größe des Sattels wird so gewählt, daß der aus der runden Austragsöffnung fallende Schüttgutstrom auf das Materialpolster im hinteren Teil des Sattels fällt. Der Schüttgutstrom rutscht auf dem Materialpolster zur Abwurfkante und fällt dann in den Pufferbunker. Dabei wird er auseinandergezogen und fällt horizontal vermischt auf den Schüttgutkamm. Die Breite des Schüttgutkammes beträgt vorzugsweise mindestens 70% der Breite der Pufferbunkers. Die zur Erzielung der gewünschten Breite des Schüttgutkammes erforderliche Abwurfbreite wird durch einen entsprechenden Radius der Abwurfkante erzielt. Dieser Radius wird in der Weise ermittelt, daß von dem in Lage und Größe bekannten Auftrefffleck des Schüttgutes auf dem Sattel, der gewünschte Abstand zur Abwurfkante und die gewünschte Breite des Abwurfes eingezeichnet werden und von den Endpunkten der Breite jeweils eine Gerade als Tangente an den Auftrefffleck gezogen werden. Deren Länge bis zum Schnittpunkt ergibt den Radius der Abwurfkante. Durch den Abwurf vom Sattel auf den Schüttgutkamm erfolgt eine genau definierte Entmischung des Schüttgutes im Pufferbunker, wobei – in Förderrichtung der Unterlage gesehen – das grobkörnige Schüttgut hinten, das feinkörnige Schüttgut in der Mitte und ein mittleres Korn (grobes vom feinkörnigen) vorne liegt. Der Boden des Pufferbunkers erstreckt sich von der hinteren Wand zur hinteren Austragskante und von der vorderen Wand zur vorderen Austragskante. Die Seitenwände sind senkrecht. Die Neigung des Bodens wird wieder so gewählt, daß sich ein Materialpolster als Rutschfläche bildet und um die Austragskanten ist jeweils ein schmaler, nach oben überstehender Blechstreifen angebracht. Durch die Anordnung der Austragskanten wird das Schüttgut in der Weise ausgetragen, daß das grobkörnige Schüttgut zuerst angetragen wird und als untere Schicht auf die Unterlage gelangt. Dann wird das feinkörnige Schüttgut als mittlere Schicht ausgetragen und danach das mittlere Korn als oberste Schicht. Der Austrag erfolgt durch freies Ausfließen ohne Abscheren an der vorderen Austragskante. Durch die konkave und konvexe Ausgestaltung der Austragskanten mit gleichen Radien wird eine gleichmäßige Verteilung auf der Unterlage bis zu deren Seitenwänden erreicht.

Eine vorzugsweise Ausgestaltung besteht darin, daß der sattelförmige Verteiler (3) exzentrisch verdrehbar angeordnet ist, so daß der Scheitelpunkt des Materialpolsters (6) zur Sattelachse verdrehbar ist. Dadurch kann der Sattel auch bei schräger Aufgabe des Schüttgutes in die Schurre so eingestellt werden, daß eine Entmischung auf den Sattel vermieden wird.

Eine vorzugsweise Ausgestaltung besteht darin, daß der sattelförmige Verteiler (3) unmittelbar unter der runden Austragsöffnung (2) der Schurre (1) angeordnet ist. Dadurch wird eine Entmischung vermieden, und die Bauhöhe niedrig gehalten.

Eine vorzugsweise Vorrichtung besteht darin, daß bei einer kreisringförmig ausgebildeten beweglichen Unterlage (5) und eckig ausgebildetem Pufferbunker (7) die Unterkante (18) der äußeren Seitenwand des Pufferbunkers (3) höher angeordnet ist als die Unterkante der inneren Seitenwand. Dadurch wird trotz unterschiedlichen Abstandes der beiden Seitenwände des Pufferbunkers von den Wänden der Unterlage eine gleichmäßige Beschickung bis zu den Wänden der Unterlage erzielt.

Eine vorzugsweise Vorrichtung besteht darin, daß ein Schichthöhenfühler (16) auf der Schüttgutschicht auf der Unterlage (5) und ein Füllstandsfühler (17) in den Pufferbunker angeordnet sind, wobei der Schichthöhenfühler (16) als Minimumindikator und der Füllstandsfühler (17) als Maximumindikator die Geschwindigkeit der Unterlage regeln. Der Schichthöhenfühler und der Füllstandsfühler können als Klappen ausgebildet werden, die auf dem Schüttgut aufliegen und bei einer bestimmten Winkelstellung einen Kontakt auslösen. Der Schichthöhenfühler löst den Minimumkontakt aus, wenn das Schüttgut im Pufferbunker im vorderen Teil unter die Gerade (14) absinkt. In diesem Fall wird die Fahrgeschwindigkeit der Unterlage verringert oder auf Null gesetzt. Der Füllstandsfühler löst den Maximumkontakt aus, wenn der Schüttgutkamm im Pufferbunker zu nahe an die Abwurfkante des Sattels herankommt. In diesem Fall muß die Fahrgeschwindigkeit der Unterlage erhöht werden. Der Füllstandsfühler ist entsprechend dem Schüttgutkamm konkav gebogen. In einer zweiten Stellung kann der Füllstandsfühler eine Not-Aus-Schaltung des Zulaufes bewirken.

Die Erfindung wird anhand der Figuren näher erläutert.

Fig. 1 ist ein Querschnitt durch eine Aufgabevorrichtung, der abgesiebtes Sintergut zugeführt wird.

Fig. 2 ist ein Querschnitt durch eine Aufgabevorrichtung, der unabgesiebtes Sintergut sowie Rostdurchfall zugeführt werden.

Fig. 3 ist ein Schnitt A-A gemäß Fig. 1 ohne die Tragkonstruktion.

Fig. 4 zeigt die Ermittlung des Radius des Verteilers.

Die Schurre (1) hat eine runde Austragsöffnung (2) mit einem schmalen nach oben überstehenden Blechstreifen (19), von dessen Oberkante sich ein Materialpolster (20) auf dem geneigten Boden der Schurre (1) aufböscht. Unter der Austragsöffnung (2) ist der sattelförmige Verteiler (3) mit kreisbogenförmiger Abwurfkante (4) angeordnet, die entgegen der Förderrichtung der Unterlage (5) gerichtet ist. Um die Abwurfkante (4) ist ein schmaler, nach oben überstehender Blechstreifen (21) angeordnet, von dessen Oberkante sich ein Materialpolster (6) auf dem Verteiler (3) aufböscht. Der Verteiler (3) ist im oberen Teil des Pufferbunkers (7) angeordnet, der direkt an die Schurre (1) angeschlossen ist. Im Pufferbunker (7) befindet sich eine Materialsäule (8) mit einem Schüttgutkamm (9), auf den das von Verteiler (3) herabfallende Schüttgut fällt, wobei der Schüttgutkamm nicht bis zu den Seitenwänden des Pufferbunkers reicht, sondern das Schüttgut von den Enden des Schüttgutkammes zu den Seitenwänden auf der Materialböschung herabrutscht. Der Boden (12) des Pufferbunkers (7) ist zur vorderen Abwurfkante (10) und zur hinteren Abwurfkante (11) hin geneigt angeordnet. Der Radius der konvak ausgebildeten vorderen Abwurfkante (10) und der Radius der konvex ausgebildeten hinteren Abwurfkante (11) sind gleich, so das die Breite der frei bleibenden Austrittsöffnung überall gleich ist. An beiden Abwurfkanten (10) und (11) ist je ein schmales Blech (22, 23) angeordnet, von deren Oberkante sich Materialpolster (24, 25) aufböschen. Der Schnittpunkt (13) der Geraden (14), die unter dem Böschungswinkel $\alpha$ des Schüttgutes von der Unterlage (5) an die vordere Austragskante (10) gelegt wird, mit der Geraden (15), die unter den Böschungswinkel $\alpha$ an die hintere Austragskante 11 gelegt wird, liegt vor der vorderen Austragskante (10) und ergibt die Höhe des Schnittgutes auf der Unterlage (5). Der Schichthöhenfühler (16) gibt einen Kontakt, wenn die Materialsäule (8) im Pufferbunker unter die Gerade (14) fällt und sich dann die Schichthöhe ändern würden, wenn die Fahrgeschwindigkeit der Unterlage (5) nicht entsprechend verringert wird.

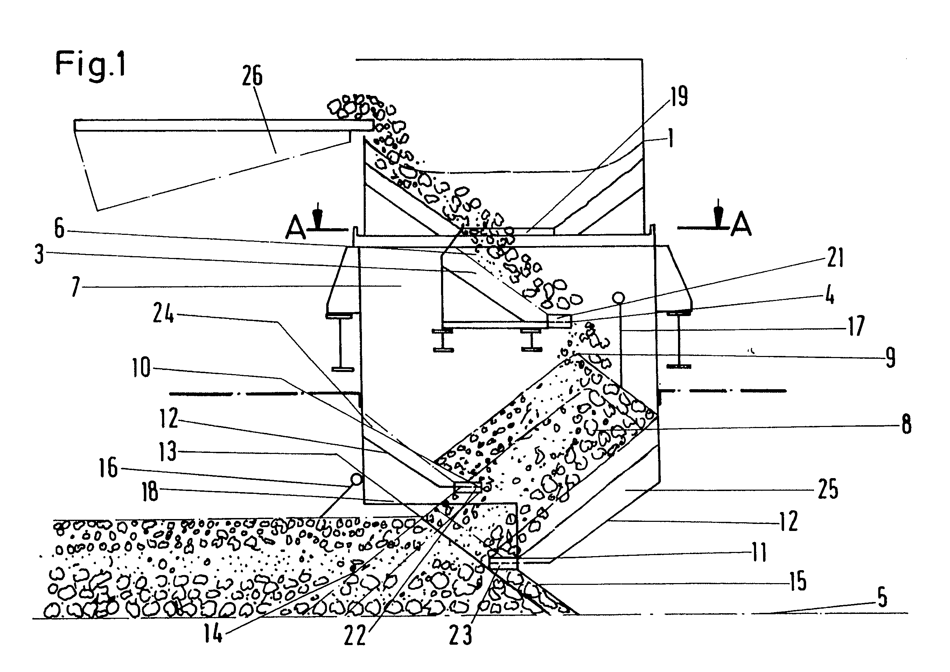

Der Füllstandsfühler (17) ist in der Fig. 1 in der Nullstellung bei ausgeglichenem Zu- und Ablauf des Schüttgutes dargestellt.

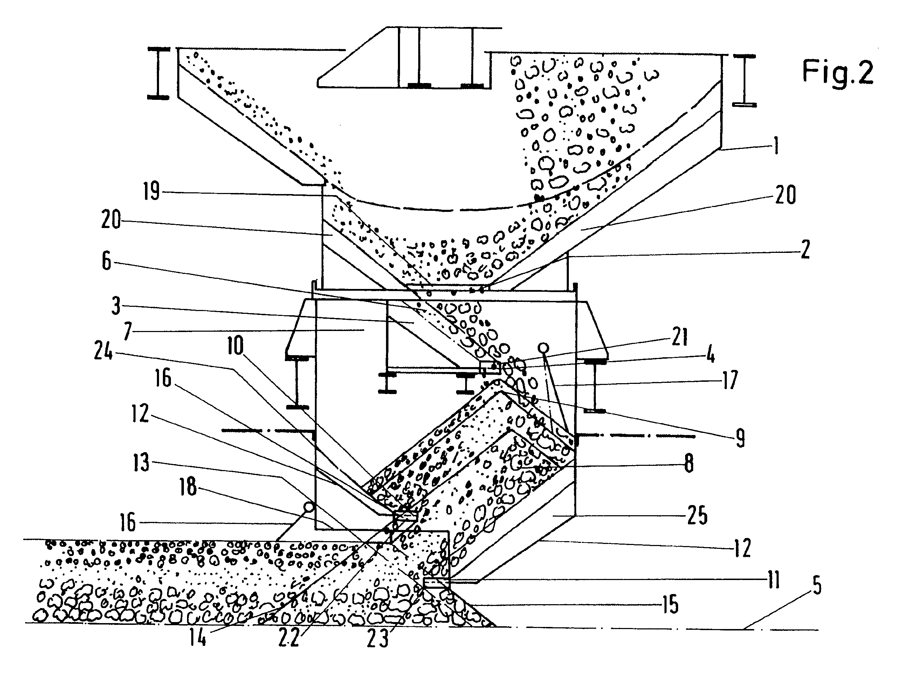

In der Fig. 2 ist der Füllstandsfühler (17) in der Not-Aus-Stellung (ausgezogen) und in der Maximumstellung (gestrichelt) dargestellt. In der Not-Aus-Stellung wird der Zulauf gesperrt und in der Maximumstellung wird die Fahrgeschwindigkeit der Unterlage (5) erhöht.

In Fig. 1 wird Sintergut nach Absiebung von feinkörnigem Rückgut auf einem Heißsieb (26) in die Schurre (1) aufgegeben.

In Fig. 2 wird Sintergut ohne Absiebung hinten in die Schurre (1) aufgegeben und gleichzeitig Rostdurchfall von der Sintermaschine vorne in die Schurre (1) aufgegeben.

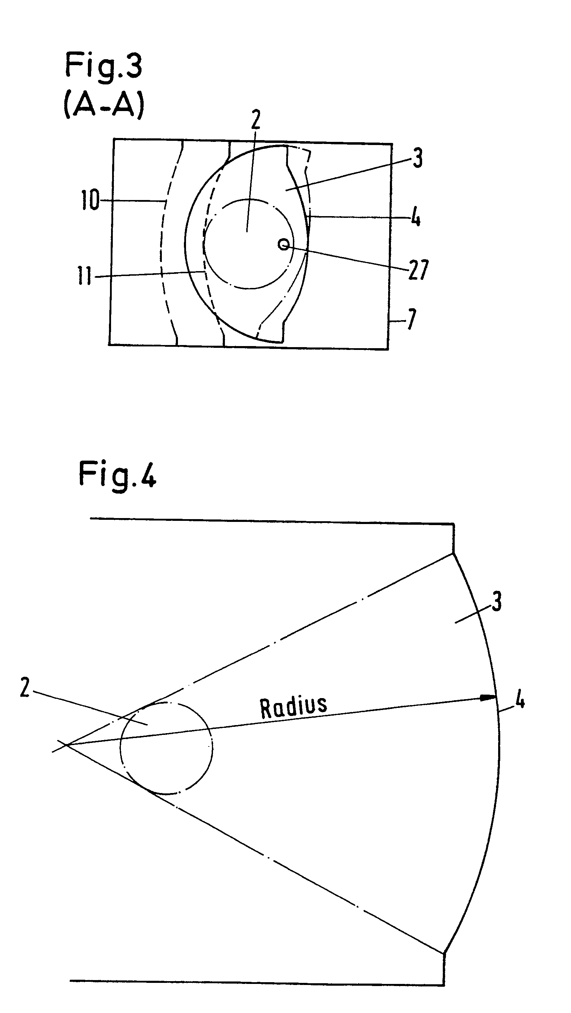

In Fig. 3 ist der Sattel (3) exzentrisch verdrehbar um Punkt (27) dargestellt.

## Ansprüche

1. Vorrichtung zur Aufgabe von Schüttgut mit großer Korngrößenbandbreite auf eine gasdurchlässige, bewegliche Unterlage (5) in Schichten mit unterschiedlicher Korngröße

gekennzeichnet durch

a) eine Schurre (1) mit in horizontaler Ebene liegender, runder Austragsöffnung (2) zur Aufnahme des Schüttgutes,

b) einen unter der Austragsöffnung (2) der Schurre (1) angeordneten, sattelförmigen Verteiler (3) mit konvex- kreisbogenförmiger Abwurfkante (4), die entgegen der Förderrichtung der beweglichen Unterlage (5) gerichtet ist, und mit einen von der Abwurfkante (4) ausgehenden Materialpolster (6) aus Schüttgut auf dem Boden des sattelförmigen Verteilers (3),

c) einen Pufferbunker (7) zur Aufnahme des von dem sattelförmigen Verteiler (3) abgeworfenen Schüttgutes,

d) Bildung einer Materialsäule (8) aus Schüttgut im Pufferbunker (7) mit einem unterhalb der Abwurfkante (4) des sattelförmigen Verteilers (3) liegenden Schüttgutkamm (9),

e) einen solchen Radius der kreisbogenförmigen Abwurfkante (4), daß die zur Erzielung des Schüttgutkammes (9) erforderliche Abwurfbreite erzielt wird, wobei der Schüttgutkamm (9) nicht bis zu den Seitenwänden des Pufferbunkers (7) reicht,

f) eine in Förderrichtung der Unterlage (5) vorne liegende, in horizontaler Ebene konkav ausgebildete Austragskante (10) im Pufferbunker (7) und eine in Förderrichtung hinten liegende, in horizontaler Ebene konvex ausgebildete Austragskante (11), wobei die hintere Austragskante (11) in vertikaler Richtung tiefer angeordnet ist als die vordere Austragskante (10),

g) einen zu den Austragskanten (10, 11) hin geneigt angeordneten Boden (12) des Pufferbunkers (7),

h) eine solche Anordnung der Austragskanten (10, 11), daß die Schnittpunkte (13) von unter dem Böschungswinkel $\alpha$ des Schüttgutes von der Unterlage (5) an die kreisbogenförmigen Austragskanten (10, 11) gelegten Geraden (14, 15) vor der vorne liegenden Austragskante (10) liegen und die gewünschte Schichthöhe auf der Unterlage (5) ergeben.

2. Vorrichtung nach Anspruch 1, dadurch gekennzeichnet, daß der sattelförmige Verteiler (3) exzentrisch verdrehbar angeordnet ist, so daß der Scheitelpunkt des Materialpolsters (6) zur Sattelachse verdrehbar ist.

3. Vorrichtung nach Anspruch 1 oder Anspruch 2, dadurch gekennzeichnet, daß der sattelförmige Verteiler (3) unmittelbar unter der run den Austragsöffnung (2) der Schurre (1) angeordnet ist.

4. Vorrichtung nach einem der Ansprüche 1 bis 3, dadurch gekennzeichnet, daß bei einer kreisringförmig ausgebildeten beweglichen Unterlage (5) und eckig ausgebildetem Pufferbunker (7) die Unterkante (18) der äußeren Seitenwand des Pufferbunkers (3) höher angeordnet ist als die Unterkante der inneren Seitenwand.

5. Vorrichtung nach einem der Ansprüche 1 bis 4, dadurch gekennzeichnet, daß ein Schichthöhenfühler (16) auf der Schüttgutschicht auf der Unterlage (5) und ein Füllstandsfühler (17) in den Pufferbunker angeordnet sind, wobei der Schichthöhenfühler (16) als Minimumindikator und der Füllstandsfühler (17) als Maximumindikator die Geschwindigkeit der Unterlage regeln.

## Claims

1. Device for feeding bulk material having a wide grain size range to a gas-permeable, movable surface (5) in layers of different grain sizes,
characterised by
a) a chute (1) with a round discharge opening (2) lying in the horizontal plane, for receiving the bulk material,
b) a saddle-shaped distributor (3) located beneath the discharge opening (2) of the chute (1) and having a convex-arcuate throw-off edge (4) which is directed against the direction of conveyance of the movable surface (5), and with a cushion (6) of bulk material on the base of the saddle-shaped distributor (3) starting from the throw-off edge (4),
c) a buffer bin (7) for receiving the bulk material thrown off by the saddle-shaped distributor (3),
d) formation of a column (8) of bulk material in the buffer bin (7) with a ridge (9) of bulk material located beneath the throw-off edge (4) of the saddle-shaped distributor (3),
e) such a radius of the arcuate throw-off edge (4) that the throw-off width necessary to achieve the ridge (9) of bulk material is achieved, with the ridge (9) of bulk material not extending as far as the side walls of the buffer bin (7),
f) a discharge edge (10) in the buffer bin (7), which edge is foremost in the direction of conveyance of the surface (5) and is concave in the horizontal plane, and a discharge edge (11) which is rearmost in the direction of conveyance and is convex in the horizontal plane, with the rear discharge edge (11) being located deeper in the vertical direction than the front discharge edge (10),
g) a base (12) of the buffer bin (7) which is arranged inclined towards the discharge edges (10, 11),
h) such an arrangement of the discharge edges (10, 11) that the points of intersection (13) of straight lines (14, 15) laid at the angle of repose α of the bulk material from the surface (5) to the arcuate discharge edges (10, 11) are located in front of the foremost discharge edge (10) and yield the desired layer height on the surface (5).

2. Device according to Claim 1, characterised in that the saddle-shaped distributor (3) is arranged eccentrically rotatably, so that the vertex of the cushion of material (6) can be rotated relative to the saddle axis.

3. Device according to Claim 1 or Claim 2, characterised in that the saddle-shaped distributor (3) is arranged directly beneath the round discharge opening (2) of the chute (1).

4. Device according to one of Claims 1 to 3, characterised in that for an annular movable surface (5) and cornered buffer bin (7) the lower edge (18) of the outer side wall of the buffer bin (3) is higher than the lower edge of the inner side wall.

5. Device according to one of Claims 1 to 4, characterised in that a layer height sensor (16) is located on the layer of bulk material on the surface (5) and a level sensor (17) is arranged in the buffer bin, with the level height sensor (16) as a minimum indicator and the level sensor (17) as the maximum indicator controlling the speed of the surface.

## Revendications

1. Installation de chargement de produit en vrac ayant une grande largeur de bande granulométrique sur un support (5) perméable aux gaz et mobile, en couches de granulométrie différentes,
caractérisée par
a) une trémie (1) ayant un orifice de déchargement (2) circulaire s'étendant dans un plan horizontal et destinée à la réception du produit en vrac,
b) un répartiteur (3) en forme de selle, qui est disposé en-dessous de l'orifice de déchargement (2) de la trémie (1) et qui comporte un bord de déversement (4) en forme d'arc de cercle convexe et dirigé dans le sens opposé au sens de déplacement du support (5) mobile, et comprenant, sur le fond du répartiteur (3) en forme de selle, un matelas de matériau (6) en produit en vrac qui part du bord de déversement (4),
c) un silo tampon (7) destiné à la réception du produit en vrac déversé par le répartiteur (3) en forme de selle,

d) la formation d'une colonne de matériau (8) en produit en vrac dans le silo tampon (7) ayant une crête de produit en vrac (9) se trouvant en-dessous du bord de déversement (4) du répartiteur (3) en forme de selle,

e) un rayon du bord de déversement (4) en forme d'arc de cercle tel que l'on obtient la largeur de déversement qui est nécessaire pour obtenir la crête de produit en vrac (9), cette crête (9) n'allant pas jusqu'aux parois latérales du silo tampon (7),

f) un bord de déchargement (10) du silo tampon (7), qui se trouve en avant dans le sens de déplacement du support (5) et qui est de forme concave dans un plan horizontal et un bord de déchargement (11), qui se trouve en arrière dans le sens de déplacement et qui est de forme convexe dans un plan horizontal, le bord de déchargement arrière (11) étant disposé plus bas suivant la direction verticale que le bord de déchargement avant (10),

g) un fond (12) du silo tampon (7), qui est incliné vers les bords de déchargement (10, 11),

h) un agencement des bords de déchargement (10, 11) tel que les points d'intersection (13) de droites (14, 15), passant par les bords de déchargement (10, 11) en forme d'arc de cercle et faisant l'angle de talus α du produit en vrac avec le support (5), se trouvent devant le bord de déchargement antérieur (10) et donnent la hauteur de couche souhaitée sur le support (5).

2. Installation suivant la revendication 1, caractérisée en ce que en ce que le répartiteur (3) en forme de selle est monté tournant en étant excentré de sorte que le sommet du matelas de matériau (6) peut tourner par rapport à l'axe de la selle.

3. Installation suivant la revendication 1 ou suivant la revendication 2, caractérisée en ce que le répartiteur (3) en forme de selle est disposé immédiatement sous l'orifice de déchargement (2) circulaire de la trémie (1).

4. Installation suivant l'une des revendications 1 à 3, caractérisée en ce que, pour un support (5) mobile en forme d'anneau de cercle et pour un silo tampon (7) polygonal, le bord inférieur (18) de la paroi latérale extérieure du silo tampon (3) est plus haut que le bord inférieur de la paroi latérale intérieure.

5. Installation suivant l'une des revendications 1 à 4, caractérisée en ce qu'un détecteur de hauteur de couche (16) est prévu sur la couche de produit en vrac sur le support (5) et un détecteur de niveau (17) est prévu dans le silo tampon, le détecteur de hauteur de couche (16) réglant la vitesse du support en tant qu'indicateur de minimum et le détecteur de niveau (17) réglant la vitesse de support en tant qu'indicateur de maximum.

Fig.1

EP 0 302 539 B1

Fig.2

# Fig.3
## (A-A)

# Fig.4

Radius